# EUROPÄISCHE PATENTSCHRIFT

(11) **EP 2 234 828 B1**
(45) Veröffentlichungstag und Bekanntmachung des Hinweises auf die Patenterteilung: **30.01.2013**
(21) Anmeldenummer: 08862413.5
(22) Anmeldetag: 20.10.2008
(51) Int. Cl.: B60G 17/016, B60G 17/0165, B60G 17/018, B60G 17/04

(54) **VERFAHREN ZUR STEUERUNG EINES KRAFTFAHRZEUG-FAHRWERKS**
METHOD FOR CONTROLLING A MOTOR VEHICLE CHASSIS
PROCÉDÉ DE COMMANDE D'UN CHÂSSIS DE VÉHICULE AUTOMOBILE

(30) Priorität: 17.12.2007 DE 102007060703
(43) Veröffentlichungstag der Anmeldung: 06.10.2010
(73) Patentinhaber: Continental Teves AG & Co. OHG, 60488 Frankfurt (DE)
(72) Erfinder: HOINKHAUS, Hermann, 30938 Burgwedel (DE)
(86) Internationale Anmeldenummer: PCT/EP2008/064103
(87) Internationale Veröffentlichungsnummer: WO 2009/077232

(56) Entgegenhaltungen:
- EP-A- 1 464 866
- DE-A1- 3 522 869
- DE-A1-102005 024 190
- DE-A1-102007 006 034
- US-A1- 2006 284 387
- US-B1- 6 412 788

## Beschreibung

Die Erfindung betrifft ein Verfahren zur Steuerung eines Kraftfahrzeug-Fahrwerks, das zumindest an einer Fahrzeugsachse an der Radaufhängung jedes Fahrzeugrades jeweils eine Luftfeder mit einer Hauptluftkammer und mindestens einer über ein elektrisch ansteuerbares Schaltventil mit dieser verbindbaren und von dieser trennbaren Zusatzluftkammer aufweist, wobei die Schaltventile der Luftfedern zur Umschaltung auf eine andere Federkennlinie während einer Fahrwerksschwingung geöffnet oder geschlossen werden.

In Fahrwerken von Kraftfahrzeugen kommen Luftfedern schon seit längerem in unterschiedlicher Ausbildung und Anordnung alternativ oder in Kombination mit Stahlfedern zur Anwendung. Eine Luftfeder der hier betrachteten Bauart weist eine Hauptluftkammer mit variablem Volumen und mindestens eine Zusatzluftkammer mit konstantem Volumen auf. Das Volumen der Hauptluftkammer, das teilweise durch einen Gürtelbalg oder durch einen Rollbalg begrenzt sein kann, wird durch eine Erhöhung des Fülldruckes und durch eine Verringerung der äußeren Last vergrößert sowie durch eine Verringerung des Fülldruckes und durch eine Erhöhung der äußeren Last verkleinert. Die Federeigenschaft der Luftfeder wird im wesentlichen durch das Volumen der unter einem aus dem Fülldruck und einer äußeren Last resultierenden Druck stehenden sowie in der Hauptluftkammer und gegebenenfalls zusätzlich in der Zusatzluftkammer eingeschlossenen Druckluft gebildet. Durch das Öffnen des Schaltventils und der damit verbundenen Erhöhung des wirksamen Luftvolumens wird die Federsteifigkeit der Luftfeder reduziert und durch das Schließen des Schaltventils sowie der damit verbundenen Reduzierung des wirksamen Luftvolumens entsprechend erhöht. Durch die Betätigung des Schaltventils einer Luftfeder ist somit zumindest eine Umschaltung zwischen den Kennlinien einer harten, für eine sportliche Fahrwerksabstimmung geeigneten Federung und einer weichen, für eine komfortable Fahrwerksabstimmung geeigneten Federung möglich. Ebenso kann durch eine entsprechende Ansteuerung eines Teils der Luftfedern eines Kraftfahrzeugs eine betriebsbedingte Neigung des Fahrzeugaufbaus vermieden oder zumindest stark reduziert werden. So kann beispielsweise bei einer Kurvenfahrt der Seitenneigung der Karosserie durch eine Verhärtung der kurvenäußeren Luftfedern und bei einem starken Bremsmanöver dem Eintauchen bzw. Nicken des Vorderwagens durch eine Verhärtung der Luftfedern der Vorderachse entgegen gewirkt werden.

In der DE 35 22 869 C2 ist ein Federbein einer Fahrzeugaufhängung beschrieben, bei dem eine Luftfeder koaxial und parallel wirksam zu einer Schraubenfeder und zu einem hydraulischen Stoßdämpfer angeordnet ist. Die Luftfeder umfasst eine Hauptluftkammer und eine unmittelbar angrenzende sowie über ein Ventil mit dieser verbindbare, hier als Hilfsluftkammer bezeichnete Zusatzluftkammer. Die Luftfeder dient im wesentlichen zur Einstellung der Bodenfreiheit des betreffenden Kraftfahrzeugs, was durch das Befüllen der Hauptluftkammer mit Druckluft und das Ablassen von Druckluft aus der Hauptluftkammer erfolgt. Die Betätigung des Ventils erfolgt über eine Steuerstange, die drehbar innerhalb der Kolbenstange des Stoßdämpfers angeordnet ist, und über die zugleich ein Ventil zum Öffnen und Verschließen einer Zusatzbohrung in dem Kolben des Stoßdämpfers betätigbar ist. Zur Steuerung der Fahrwerksabstimmung des betreffenden Kraftfahrzeugs ist vorgesehen, dass die aktuelle Fahrgeschwindigkeit erfasst wird, und dass die Fahrwerksabstimmung bei Überschreiten einer vorgebbaren Umschaltgeschwindigkeit durch das Schließen der Ventile mehrerer Federbeine auf hart und bei Unterschreiten der Umschaltgeschwindigkeit durch das Öffnen der Ventile auf weich umgestellt wird. Nachteilig an diesen bekannten Federbeinen ist die relativ komplizierte und demzufolge störungsanfällige Bauweise der Ventileinrichtung, die auch eine relativ lange Schaltzeit der Ventile erwarten lässt. Ein weiterer Nachteil besteht in der gleichzeitigen Umschaltung zwischen den Kennlinien der Luftfeder und des Stoßdämpfers, die bei Vorliegen einer Fahrwerksschwingung zu ungünstigen Lastspitzen in einem der beiden Bauteile führt. Eine weitere Luftfeder mit einer Hauptluftkammer und einer unmittelbar angrenzenden Zusatzluftkammer ist aus der DE 40 18 712 A1 bekannt. Die Hauptluftkammer ist mit der Zusatzluftkammer über ein Steuerventil verbindbar, das in einer Trennwand zwischen der Hauptluftkammer und der Zusatzluftkammer angeordnet ist. Die Trennwand kann z.B. durch einen angrenzenden Federdeckel des Federbalgs der Hauptluftkammer gebildet sein. Das Steuerventil ist als ein druckgesteuertes Schaltventil ausgebildet, das zusammen mit den Schaltventilen weiterer Luftfedern von einem gemeinsamen, als Magnetschaltventil ausgebildeten Vorsteuerventil ansteuerbar ist. Aufgrund der Bauart der Ventileinrichtung ist von einer relativ langen Schaltzeit des Steuerventils auszugehen. Zudem kann der aktuelle Schaltzustand des druckgesteuerten Schaltventils ohne einen zusätzlichen Schaltsensor nicht zuverlässig ermittelt werden.

In der DE 203 02 274 U1 ist dagegen eine Luftfeder beschrieben, bei der die Zusatzluftkammer entfernt von der Hauptluftkammer angeordnet ist. Die Zusatzluftkammer steht über eine Verbindungsleitung und ein in der Verbindungsleitung angeordnetes Steuerventil mit der Hauptluftkammer in Verbindung. Die Verbindungsleitung ist als ein Helmholtz-Resonator ausgebildet, der bei hochfrequenten Druckschwankungen auch bei nicht vollständig geschlossenem Steuerventil als geschlossen wirkt und somit einen Luftaustausch zwischen der Hauptluftkammer und der Zusatzluftkammer verhindert. Das Steuerventil ist als eine drehbar gelagerte Drosselklappe ausgebildet, die entweder über ein Federelement in eine Endlage belastbar und über eine Magnetspule gegen die Rückstellkraft des Federelementes verstellbar oder über zwei gegensinnig wirksame Magnetspulen verstellbar ist. Die Bauart dieses Steuerventils ist zwar relativ aufwendig, sie ermöglicht jedoch eine schnelle wie auch eine kontinuierliche, also relativ langsame Verstellung zwischen dem vollständig geöffneten und dem vollständig geschlossenen Schaltzustand.

Die EP 1 464 866 A2 offenbart eine Luftfederanordnung, bei der einem Luftfederbalg ein Zusatzvolumen zugeordnet ist, welches abhängig von Bewegungsgrößen eines als Luftsäule ausgebildeten Teilvolumens, welches auf ein Feder-Masse-System wirkt, geöffnet oder geschlossen wird.

Aus der DE 10 2007 006 034 A1 ist ein Federungssystem mit Gasfedern und ein Verfahren zur Anpassung von Fahreigenschaften eines Fahrzeugs bekannt, bei dem abhängig von ermittelten Querbeschleunigungen die Steifigkeit der Gasfedern durch Zuschalten von Zusatzvolumina verändert wird.

Bei allen Systemen treten während der Fahrt eines Kraftfahrzeugs praktisch fortwährend Fahrwerksschwingungen auf, die durch Fahrmanöver, wie Kurvenfahrten, Brems- und Beschleunigungsvorgänge, sowie durch Fahrbahnunebenheiten verursacht und durch die Fahrwerksfedem sowie die Fahrwerksdämpfer aufgenommen und übertragen werden.

Derartige Fahrwerksschwingungen liegen erfahrungsgemäß aufbauseitig im Frequenzbereich von 1 bis 5 Hz und radseitig im Frequenzbereich von 7 bis 15 Hz. Sollen alle Luftfedern oder zumindest einige der Luftfedern eines Kraftfahrzeugs während der Fahrt auf eine andere Kennlinie umgeschaltet werden, welches von dem Fahrer durch die Betätigung eines entsprechenden Bedienungselementes oder automatisch durch sensorisch erfasste Betriebsparameter von einem Steuergerät ausgelöst werden kann, so ist dies unabhängig von einer aktuell vorliegenden Fahrwerksschwingung durch ein relativ langsames und kontinuierliches Schließen oder Öffnen der betreffenden Steuerventile möglich. Für einen derartigen stetigen Übergang zwischen zwei Federkennlinien sind jedoch eine relativ aufwendige Steuerung sowie robuste Steuerventile erforderlich, da es während des Schaltvorgangs zu dynamischen Strömungsvorgängen zwischen den beiden Luftkammern und einer entsprechend hohen mechanischen Belastung der Steuerventile durch Strömungskräfte kommt.

Steuerungstechnisch einfacher und kostengünstiger realisierbar ist es dagegen, wenn als Steuerventile relativ schnell schließende Schaltventile, bevorzugt Magnetschaltventile, verwendet werden. Wenn diese Schaltventile zur Umschaltung zwischen zwei Federkennlinien der Luftfedern bei Vorliegen einer Fahrwerksschwingung aber zu einem beliebigen Zeitpunkt geöffnet oder geschlossen werden, so führt dies im allgemeinen zu einer sprunghaften Änderung der jeweiligen Federsteifigkeit und der aktuellen Federkraft der Luftfedern, die sich jeweils als ein Laststoß äußert, der eine hohe mechanische Belastung der Fahrwerksbauteile bewirkt und von den Fahrzeuginsassen als unkomfortabel empfunden wird.

Die DE 10 2005 024 190 A1 offenbart hierzu ein Federsystem für ein Schienenfahrzeug, nicht für ein Kraftfahrzeug, welches aber auch Schaltmittel zum Umschalten des Federsystems zwischen zwei Zuständen unterschiedlicher Steifigkeit aufweist, wobei in einer Ausführung als geschlossenes Luftfedersystem einem Federbalg ein Zusatzvolumen in Form eines Lufttanks zuschaltbar ist.

Ausgehend von diesem Stand der Technik liegt der vorliegenden Erfindung daher die Aufgabe zugrunde, ein Verfahren zur Steuerung eines Kraftfahrzeug-Fahrwerks anzugeben, mit dem unter Verwendung einfacher und kostengünstiger Schaltventile auch während einer Fahrwerksschwingung eine weitgehend stoßfreie und komfortable Umschaltung der Luftfedern eines Kraftfahrzeugs auf eine andere Federkennlinie möglich ist.

Die Lösung dieser Aufgabe ergibt sich aus den Merkmalen des Hauptanspruchs, während vorteilhafte Ausgestaltungen und Weiterbildungen des erfindungsgemäßen Verfahrens Gegenstand der Ansprüche 2 bis 11 sind.

Die Erfindung geht also aus von einem Fahrwerk eines Kraftfahrzeugs, das zumindest an einer Fahrzeugsachse an der Radaufhängung jedes Fahrzeugrades jeweils eine Luftfeder mit einer Hauptluftkammer und mindestens einer über ein elektrisch ansteuerbares Schaltventil, insbesondere über ein als Magnetschaltventil ausgebildetes Schaltventil, mit dieser verbindbaren und von dieser trennbaren Zusatzluftkammer aufweist, und bei dem die Schaltventile während einer Fahrwerksschwingung zur Umschaltung auf eine andere Federkennlinie geöffnet oder geschlossen werden.

Damit der an sich sprunghafte und unstetige Übergang zwischen den beiden Federkennlinien möglichst stoßarm und komfortabel abläuft, ist zudem erfindungsgemäß vorgesehen, dass die Fahrwerksschwingung mittels eines Federwegsensors erfasst und zur Ermittlung zumindest einer vorherrschenden Schwingungsfrequenz der Fahrwerksschwingung sowie der aktuellen Phasenlage der Fahrwerksschwingung ausgewertet wird, und dass unter Berücksichtigung einer zumindest näherungsweise bekannten Schaltzeit Δt_{S} der Schaltventile ein Referenzzeitpunkt t_{Ref} und eine daran anschließende Wartezeit derart bestimmt werden, dass ein zum Ende der Wartezeit Δt_{W} ausgelöster Schaltvorgang zum Öffnen oder Schließen der Schaltventile der betreffenden Luftfedern in etwa im Nulldurchgang to der Fahrwerksschwingung beendet wird.

Da in der Nähe des Nulldurchgangs der Fahrwerksschwingung die dynamische Belastung der Luftfedern jeweils nahezu Null ist, erfolgt durch den in diesem Zeitpunkt liegenden Abschluss des Schaltvorgangs, also des Öffnens oder Schließens des betreffenden Schaltventils, ein weitgehend stetiger Übergang zwischen der zuvor wirksamen alten Federkennlinie und der durch den Schaltvorgang aktivierten neuen Federkennlinie der Luftfeder. Aufgrund des dadurch vermiedenen Laststoßes wird die mechanische Belastung der Fahrwerksbauteile wie auch der Schaltventile selbst reduziert und der Fahrkomfort gesteigert.

Die Steuerungseinrichtung und die Schaltventile können relativ träge und entsprechend preisgünstig sein, da die entsprechenden Steuerungs- und Schaltungsverzögerungen durch das Verfahren implizit berücksichtigt werden. Zwar ist auch eine Auslösung des jeweiligen Schaltvorgangs mit dem Erreichen und der sensorischen Erfassung eines Nulldurchgangs t₀ der Fahrwerksschwingung möglich. Zur Erzielung derselben Wirkung würde dies jedoch eine sehr schnelle Signalverarbeitung und Schaltventile mit extrem hoher Schaltdynamik, also mit sehr kurzer Schaltzeit Δt_{S} erfordern, welches jedoch entsprechend kostspielig wäre. Demgegenüber ermöglicht die vorliegende Erfindung das zeitoptimale Schalten der Schaltventile unter Verwendung relativ träger und entsprechend preisgünstiger Komponenten.

Bei Vorliegen einer Schaltzeit Δt_{S} der Schaltventile, die kleiner als ein Viertel der Schwingungsperiode T der Fahrwerksschwingung ist (Δt_{S} < ¼ T), wird zweckmäßig der Zeitpunkt tₘₐₓ des nachfolgenden Schwingungsmaximums der Fahrwerksschwingung ermittelt und als Referenzzeitpunkt t_{Ref} zur Bestimmung der Wartezeit Δt_{W} zur Auslösung des Schaltvorgangs der Schaltventile verwendet (t_{Ref}= tₘₐₓ). Das Erreichen des nachfolgenden Schwingungsmaximums der Fahrwerksschwingung kann anhand des Nulldurchgangs der Ableitung des Wegsignals des Federwegsensors, d.h. der Federgeschwindigkeit erkannt werden. Die Wartezeit Δt_{W} ergibt sich dann als Differenz zwischen einem Viertel der Schwingungsperiode T der Fahrwerksschwingung und der Schaltzeit Δt_{S} des betreffenden Schaltventils Δt_{W} =¼ T - Δt_{S}).

Wenn die vorliegende Fahrwerksschwingung aber besonders kurzwellig bzw. hochfrequent und/oder die Schaltzeit Δt_{S} der Schaltventile besonders lang ist, so kann die Schaltzeit Δt_{S} der Schaltventile auch kleiner als die Hälfte und größer gleich einem Viertel der Schwingungsperiode T der Fahrwerksschwingung sein (¼ T ≤ Δt_{S} < ½ T). In diesem Fall wird bevorzugt der Zeitpunkt t_{0/1} des nachfolgenden Nulldurchgangs der Fahrwerksschwingung ermittelt und als Referenzzeitpunkt t_{Ref} zur Bestimmung der Wartezeit Δt_{W} zur Auslösung des Schaltvorgangs der Schaltventile verwendet (t_{Ref}= t_{0/1}). Das Erreichen des Nulldurchgangs der Fahrwerksschwingung ergibt sich unmittelbar aus dem Nulldurchgang des Wegsignals s(t) des Federwegsensors, und die Wartezeit Δt_{W} berechnet sich aus der Differenz zwischen der Hälfte der Schwingungsperiode T der Fahrwerksschwingung und der Schaltzeit Δt_{S} des betreffenden Schaltventils (Δt_{W} =½ T - Δt_{S}). Der Schaltvorgang eines Schaltventils ist dann in etwa zum Zeitpunkt t_{0/2} des darauf folgenden Nulldurchgangs der Fahrwerksschwingung beendet.

Die Schaltzeit Δt_{S} der Schaltventile ist aus Versuchen während der Entwicklungsphase des betreffenden Kraftfahrzeugs weitgehend bekannt, kann sich jedoch alterungs- und verschleißbedingt sowie aufgrund von geänderten äußeren Betriebsbedingungen dauerhaft oder vorübergehend ändern. Zur Erzielung einer hinreichenden Genauigkeit bei der Ansteuerung der Schaltventile ist es daher zweckmäßig, wenn bei der Inbetriebnahme des Kraftfahrzeugs ein abgespeicherter Startwert Δt_{S0} als Schaltzeit Δt_{S} der Schaltventile verwendet wird (At_{S} = Δt_{S0}), und wenn die aktuelle Schaltzeit Δt_{S} der Schaltventile während des Fahrbetriebs bedarfsweise oder in vorgegebenen Zeitintervallen korrigiert und am Ende des Fahrbetriebs als Startwert Δt_{S0} für den nächsten Fahrbetrieb abgespeichert wird (Δt_{S0} = Δt_{S}).

Hierzu kann während des Fahrbetriebs bei einem Schaltvorgang der Schaltventile der aktuelle Istwert Δt_{S_ist} der Schaltzeit der Schaltventile erfasst und bei einer Abweichung von dem bei demselben Schaltvorgang verwendeten Wert Δt_{S_alt} der Schaltzeit zur Ermittlung eines für die Verwendung bei nachfolgenden Schaltvorgängen vorgesehenen korrigierten Wertes Δt_{S_neu} der Schaltzeit verwendet werden (Δt_{S_neu} = f(Δt_{S_alt}, Δt_{S_ist})).

Bei Schaltventilen mit elektrischem Ventilaktor, wie den bevorzugt verwendeten Magnetschaltventilen, kann die Ermittlung des aktuellen Istwertes Δt_{S_ist} der Schaltzeit durch eine Auswertung des Zeitverlaufs der Stromaufnahme des jeweiligen Ventil-aktors erfolgen, da sich beispielsweise bei einem Elektromagneten die Stromaufnahme der Magnetspule aufgrund der Änderung ihrer Induktivität während der Bewegung des Magnetankers in signifikanter Weise ändert.

Zusätzlich oder alternativ dazu kann auch mindestens ein die Schaltzeit Δt_{S} der Schaltventile beeinflussender Betriebsparameter sensorisch erfasst und zur rechnerischen oder kennlinienbasierten Korrektur des aktuell verwendeten Wertes Δt_{S_alt} der Schaltzeit verwendet werden.

Als ein wesentlicher Betriebsparameter, der bei größeren Schwankungen zu einer Änderung der Schaltzeit Δt_{S} der Schaltventile führt, ist die Temperatur T anzusehen. Es ist daher vorteilhaft, wenn mittels eines Umgebungstemperatursensors die Umgebungstemperatur T_{U} erfasst und zur Korrektur des aktuell verwendeten Wertes Δt_{S_alt} der Schaltzeit verwendet wird (Δt_{S_neu} = f(Δt_{S_alt}, Tu)).

Aufgrund der Wärmeentwicklung an den Radbremsen bei stärkerer oder länger anhaltender Betätigung der Betriebsbremse und in den Stoßdämpfern beim Befahren besonders unebener Straßen oder bei Fahrten im Gelände kann die an den Schaltventilen herrschende Temperatur zumindest vorübergehend deutlich über der Umgebungstemperatur T_{U} liegen. Daher kann die Genauigkeit bei der temperaturabhängigen Korrektur der Schaltzeit Δt_{S} der Schaltventile dadurch erhöht werden, dass mittels eines nahe eines der Schaltventile angeordneten Fahrwerkstemperatursensors die Fahrwerkstemperatur T_{FW} erfasst und zur Korrektur des aktuellen Wertes Δt_{S_alt} der Schaltzeit zumindest des betreffenden Schaltventils verwendet wird (Δt_{S_neu} = f(Δt_{S_alt} T_{FW})).

Zur Vereinfachung der Steuerung oder bei einem Ausfall eines der Federwegsensoren können die Schaltventile der Luftfedern zumindest einer gemeinsamen Fahrzeugachse eines Kraftfahrzeugs zur Umschaltung auf eine andere Federkennlinie gemeinsam, also simultan, angesteuert werden.

Zur Erzielung einer höheren Genauigkeit beim zeit- bzw. phasenrichtigen Umschalten der Schaltventile der Luftfedern sollten diese zur Umschaltung auf eine andere Federkennlinie jedoch möglichst individuell angesteuert werden, also entsprechend der jeweiligen Phasenlage der Fahrwerksschwingungen und der unter Umständen unterschiedlichen Schaltzeiten Δt_{S} geschaltet werden.

Zur Verdeutlichung der Erfindung ist der Beschreibung eine Zeichnung mit Ausfiihrungsbeispielen beigefügt. In dieser zeigt
- Fig. 1: einen ersten steuerungstechnischen Ablauf zur Umschaltung einer Luftfeder auf eine andere Federkennlinie anhand eines schematischen Zeitdiagramms, und
- Fig. 2: einen zweiten steuerungstechnischen Ablauf zur Umschaltung einer Luftfeder auf eine andere Federkennlinie anhand eines schematischen Zeitdiagramms.

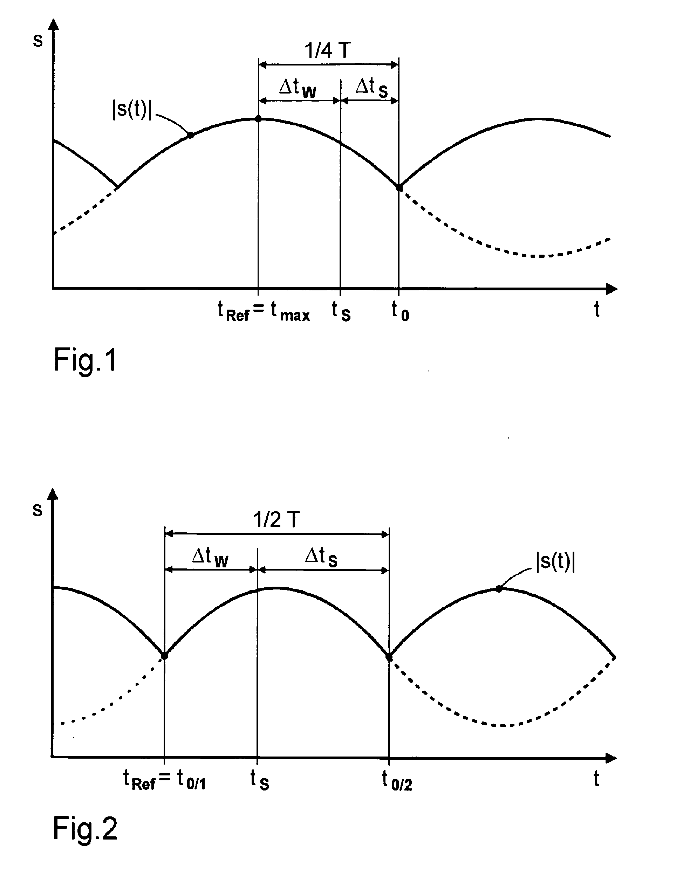

In Fig. 1 ist mit der durchgezogenen Linie der betragsmäßige Verlauf einer Fahrwerksschwingung |s(t)| dargestellt, während der eine Luftfeder eines Kraftfahrzeug-Fahrwerks durch das Öffnen oder Schließen eines die Hauptluftkammer der Luftfeder mit einer Zusatzluftkammer verbindenden Schaltventils auf eine andere Federkennlinie umgeschaltet werden soll. Da die zumindest näherungsweise bekannte Schaltzeit Δt_{S} des Schaltventils kleiner als ein Viertel T/4 der ermittelten Schwingungsperiode T der Fahrwerksschwingung ist (Δt_{S} < ¼ T), wird der Zeitpunkt tₘₐₓ des nächsten Schwingungsmaximums der Fahrwerksschwingung ermittelt und als Referenzzeitpunkt t_{Ref} festgelegt, von dem aus nach Ablauf einer Wartezeit Δt_{W} im Zeitpunkt t_{S} das Signal zum Öffnen oder Schließen des Schaltventils ausgegeben wird.

Die Wartezeit Δt_{W} wird als Differenz zwischen einem Viertel der Schwingungsperiode T und der Schaltzeit Δt_{S} des Schaltventils berechnet (Δt_{W} =¼ T - Δt_{S}), so dass der Schaltvorgang des Schaltventils in etwa zum Zeitpunkt t₀ des Nulldurchgangs der Fahrwerksschwingung abgeschlossen ist, in dem die geringste dynamische Belastung der Luftfeder vorliegt. Hierdurch ergibt sich ein weitgehend stoßfreier und stetiger Übergang zwischen der Federkennlinie der Luftfeder vor dem Schaltvorgang des Schaltventils und der Federkennlinie nach dem Schaltvorgang. Aufgrund der Berücksichtigung der Schaltungseigenschaften des Schaltventils wird ohne Funktionseinschränkungen auch die Verwendung relativ träger und entsprechend preisgünstiger Schaltventile in den Luftfedern eines Kraftfahrzeug-Fahrwerks ermöglicht.

Beim Vorliegen einer besonders hochfrequenten Fahrwerksschwingung und/oder einer besonders langen Schaltzeit Δt_{S} des Schaltventils, die z.B. durch eine besonders niedrige Umgebungstemperatur T_{U} verursacht sein kann, ist es möglich, dass die Schaltzeit Δt_{S} des Schaltventils größer oder gleich einem Viertel und kleiner als die Hälfte der Schwingungsperiode T der Fahrwerksschwingung ist (¼T ≤ Δt_{S} < ½ T) ist. Wie Fig. 2 veranschaulicht, wird in diesem Fall der Zeitpunkt t_{0/1} des nachfolgenden Nulldurchgangs der Fahrwerksschwingung ermittelt und als Referenzzeitpunkt t_{Ref} zur Bestimmung der Wartezeit Δt_{W} bis zur Auslösung des Schaltvorgangs im Zeitpunkt ts verwendet (t_{Ref}= t_{0/1} Die Wartezeit Δt_{W} berechnet sich dann aus der Differenz zwischen der Hälfte der Schwingungsperiode T der Fahrwerksschwingung und der Schaltzeit Δt_{S} des Schaltventils (Δt_{W} = ½ T - Δt_{S}), und der Schaltvorgang des Schaltventils ist in etwa zum Zeitpunkt t_{0/2} des darauf folgenden Nulldurchgangs der Fahrwerksschwingung abgeschlossen.

### Bezugszeichenliste

s Federweg, Schwingungsweg
|s(t)| Betrag des Schwingungsweges
t Zeit
tₘₐₓZeitpunkt eines Maximums des Schwingungsweges
t_{Ref} Referenzzeitpunkt
ts Beginn der Umschaltung eines Schaltventils
to Zeitpunkt eines Nulldurchgangs des Schwingungsweges
t_{0/1} Zeitpunkt des ersten Nulldurchgangs des Schwingungsweges
t_{0/2} Zeitpunkt des zweiten Nulldurchgangs des Schwingungsweges
T Schwingungsperiode
T Temperatur
T_{FW} Fahrwerkstemperatur
T_{U} Umgebungstemperatur
Δt_{S} Schaltzeit eines Schaltventils
Δt_{S_alt} Aktuell verwendeter Wert der Schaltzeit
Δt_{S_ist} Aktueller Istwert der Schaltzeit
At_{S_neu} Korrigierter Wert der Schaltzeit
At_{S0} Startwert der Schaltzeit
Δt_{W} Wartezeit

## Patentansprüche

1. Verfahren zur Steuerung eines Kraftfahrzeug-Fahrwerks, das zumindest an einer Fahrzeugsachse an der Radaufhängung jedes Fahrzeugrades jeweils eine Luftfeder mit einer Hauptluftkammer und mindestens einer über ein elektrisch ansteuerbares Schaltventil mit dieser verbindbaren und von dieser trennbaren Zusatzluftkammer aufweist, wobei die Schaltventile während einer Fahrwerksschwingung zur Umschaltung auf eine andere Federkennlinie geöffnet oder geschlossen werden, **dadurch gekennzeichnet, dass** die Fahrwerksschwingung mittels eines Federwegsensors erfasst und zur Ermittlung zumindest einer vorherrschenden Schwingungsfrequenz der Fahrwerksschwingung und der aktuellen Phasenlage der Fahrwerksschwingung ausgewertet wird, und dass unter Berücksichtigung einer zumindest näherungsweise bekannten Schaltzeit (Δt_{S}) der Schaltventile ein Referenzzeitpunkt (t_{Ref}) und eine daran anschließende Wartezeit (Δt_{W}) derart bestimmt werden, dass ein zum Ende der Wartezeit (Δt_{W}) ausgelöster Schaltvorgang zum Öffnen oder Schließen der Schaltventile der betreffenden Luftfedern in etwa im Nulldurchgang (t₀, t_{0/2}) der Fahrwerksschwingung beendet wird.

2. Verfahren nach Anspruch 1, **dadurch gekennzeichnet, dass** bei Vorliegen einer Schaltzeit (Δt_{S}) der Schaltventile, die kleiner als ein Viertel der Schwingungsperiode (T) der Fahrwerksschwingung ist (Δt_{S} <¼ T), der Zeitpunkt (tₘₐₓ) des nachfolgenden Schwingungsmaximums der Fahrwerksschwingung ermittelt und als Referenzzeitpunkt (t_{Ref}) zur Bestimmung der Wartezeit (Δt_{W}) zur Auslösung des Schaltvorgangs der Schaltventile verwendet wird (t_{Ref}= tₘₐₓ).

3. Verfahren nach Anspruch 1, **dadurch gekennzeichnet, dass** bei Vorliegen einer Schaltzeit (Δt_{S}) der Schaltventile, die kleiner als die Hälfte und größer gleich einem Viertel der Schwingungsperiode (T) der Fahrwerksschwingung ist (¼ T ≤ Δt_{S} < ½ T), der Zeitpunkt (t_{0/1}) des nachfolgenden Nulldurchgangs der Fahrwerksschwingung ermittelt und als Referenzzeitpunkt (t_{Ref}) zur Bestimmung der Wartezeit (Δt_{W}) zur Auslösung des Schaltvorgangs der Schaltventile verwendet wird (t_{Ref} = t_{0/1}).

4. Verfahren nach einem der Ansprüche 1 bis 3, **dadurch gekennzeichnet, dass** bei der Inbetriebnahme des Kraftfahrzeugs ein abgespeicherter Startwert (Δt_{S0}) als Schaltzeit (Δt_{S}) der Schaltventile verwendet wird (Δt_{S} = Δt_{S0}), und dass die Schaltzeit (Δt_{S}) der Schaltventile während des Fahrbetriebs bedarfsweise oder in vorgegebenen Zeitintervallen korrigiert und am Ende des Fahrbetriebs als Startwert (At_{S0}) für den nächsten Fahrbetrieb abgespeichert wird (At_{S0} = Δt_{S}).

5. Verfahren nach Anspruch 4, **dadurch gekennzeichnet, dass** bei einem Schaltvorgang der Schaltventile der aktuelle Istwert (Δt_{S_ist}) der Schaltzeit der Schaltventile erfasst und bei einer Abweichung von dem bei demselben Schaltvorgang verwendeten Wert (Δt_{S_alt}) der Schaltzeit zur Ermittlung eines für die Verwendung bei nachfolgenden Schaltvorgängen vorgesehenen korrigierten Wertes (Δt_{S_neu}) verwendet wird (Δt_{S_neu} = f(Δt_{S_alt}, Δt_{S_ist})).

6. Verfahren nach Anspruch 5, **dadurch gekennzeichnet, dass** bei Schaltventilen mit elektrischem Ventilaktor der Zeitverlauf der Stromaufnahme des jeweiligen Ventilaktors zur Ermittlung des aktuellen Istwertes (Δt_{S_ist}) der Schaltzeit ausgewertet wird.

7. Verfahren nach einem der Ansprüche 4 bis 6, **dadurch gekennzeichnet, dass** mindestens ein die Schaltzeit (Δt_{S}) der Schaltventile beeinflussender Betriebsparameter sensorisch erfasst und zur rechnerischen oder kennlinienbasierten Korrektur des aktuell verwendeten Wertes (Δt_{S_alt}) der Schaltzeit verwendet wird.

8. Verfahren nach Anspruch 7, **dadurch gekennzeichnet, dass** mittels eines Umgebungstemperatursensors die Umgebungstemperatur (T_{U}) erfasst und zur Korrektur des aktuell verwendeten Wertes (Δt_{S_alt}) der Schaltzeit verwendet wird (Δt_{S_neu} = f(Δt_{S_alt} T_{U})).

9. Verfahren nach Anspruch 7 oder 8, **dadurch gekennzeichnet, dass** mittels eines nahe eines der Schaltventile angeordneten Fahrwerkstemperatursensors die Fahrwerkstemperatur (T_{FW}) erfasst und zur Korrektur des aktuell verwendeten Wertes (Δt_{S_alt}) der Schaltzeit zumindest des betreffenden Schaltventils verwendet wird (Δt_{S_neu} = f(Δt_{S_alt} T_{FW})).

10. Verfahren nach einem der Ansprüche 1 bis 9, **dadurch gekennzeichnet, dass** die Schaltventile der Luftfedern zumindest einer gemeinsamen Fahrzeugachse eines Kraftfahrzeugs zur Umschaltung auf eine andere Federkennlinie gemeinsam angesteuert werden.

11. Verfahren nach einem der Ansprüche 1 bis 9, **dadurch gekennzeichnet, dass** die Schaltventile der Luftfedern eines Kraftfahrzeugs zur Umschaltung auf eine andere Federkennlinie individuell angesteuert werden.

## Claims

1. Method for controlling a motor vehicle chassis which has, at least on the wheel suspension of each vehicle wheel on a vehicle axle, in each case a pneumatic spring with a main air chamber and at least one additional air chamber which can be connected thereto and disconnected therefrom by means of an electrically actuated switching valve, wherein during oscillation of a chassis the switching valves are opened or closed in order to switch over to another spring characteristic curve, **characterized in that** the oscillation of the chassis is sensed by means of a spring travel sensor and is evaluated in order to determine at least one predominant oscillation frequency of the oscillation of the chassis and the current phase angle of the oscillation of the chassis, and **in that** by taking into account an at least approximately known switching time (Δt_{S}) of the switching valves a reference time (t_{Ref}) and an adjoining waiting time (Δt_{W}) are determined in such a way that a switching process, triggered at the end of the waiting time (Δt_{W}), for the opening or closing of the switching valves of the respective pneumatic springs is ended approximately at the zero crossing (t₀, t_{0/2}) of the oscillation of the chassis.

2. Method according to Claim 1, **characterized in that** when there is a switching time (Δt_{S}) of the switching valves which is shorter than a quarter of the oscillation period (T) of the oscillation of the chassis (Δt_{S} < ¼ T), the time (tₘₐₓ) of the subsequent oscillation maximum of the oscillation of the chassis is determined and is used as a reference time (t_{Ref}) to determine the waiting time (Δt_{W}) for the triggering of the switching process of the switching valves (t_{Ref} = tₘₐₓ) .

3. Method according to Claim 1, **characterized in that** when there is a switching time (Δt_{S}) of the switching valves which is shorter than half and longer than or equal to a quarter of the oscillation period (T) of the oscillation of the chassis (¼ T ≤ Δt_{S} < ½ T), the time (t_{0/1}) of the subsequent zero crossing of the oscillation of the chassis is determined and is used as a reference time (t_{Ref}) to determine the waiting time (Δt_{W}) for the triggering of the switching process of the switching valves (t_{Ref} = t_{0/1}) .

4. Method according to one of Claims 1 to 3, **characterized in that** when the motor vehicle is activated a stored starting value (Δt_{S0}) is used as a switching time (At_{S}) of the switching valves (Δt_{S} = Δt_{S0}) , and **in that** the switching time (Δt_{S}) of the switching valves is corrected as required or at predefined time intervals during the driving operation, and at the end of the driving operation it is stored as a starting value (Δt_{S0}) for the next driving operation (Δt_{S0} = Δt_{S}).

5. Method according to Claim 4, **characterized in that** during a switching process of the switching valves the current actual value (Δt_{S_act}) of the switching time of the switching valves is detected, and in the case of a deviation from the value (Δt_{S_old}) of the switching time used in the same switching process, said current actual value (Δt_{S_act}) is used to determine a corrected value (Δt_{S_new}) provided for the use in subsequent switching processes (Δt_{S}__{new} = f (Δt_{S_old}, Δt_{S_act})) .

6. Method according to Claim 5, **characterized in that** in the case of switching valves with an electric valve actuator the time profile of the power consumption of the respective valve actuator is used to determine the current actual value (Δt_{S_act}) of the switching time.

7. Method according to one of Claims 4 to 6, **characterized in that** at least one operating parameter which influences the switching time (Δt_{S}) of the switching valves is detected by sensors and is used for correcting, by computation or on the basis of a characteristic curve, the currently used value (Δt_{S_old}) of the switching time.

8. Method according to Claim 7, **characterized in that** the ambient temperature (T_{U}) is detected by means of an ambient temperature sensor and is used to correct the currently used value (Δt_{S_old}) of the switching time (Δt_{S_new} = f (Δt_{S_old,} T_{U}) )

9. Method according to Claim 7 or 8, **characterized in that** the chassis temperature (T_{FW}) is detected by means of a chassis temperature sensor arranged near to one of the switching valves and is used to correct the currently used value (Δt_{S_old}) of the switching time at least of the respective switching valve (Δt_{S_new} = f (Δt_{S_old}, T_{FW})) .

10. Method according to one of Claims 1 to 9, **characterized in that** the switching valves of the pneumatic springs of at least one common vehicle axle of a motor vehicle are actuated together in order to switch over to another spring characteristic curve.

11. Method according to one of Claims 1 to 9, **characterized in that** the switching valves of the pneumatic springs of a motor vehicle are actuated individually in order to switch over to another spring characteristic curve.

## Revendications

1. Procédé pour commander un mécanisme roulant de véhicule automobile, lequel présente au moins sur un essieu du véhicule sur la suspension de roue de chaque roue du véhicule à chaque fois un amortisseur pneumatique comprenant une chambre d'air principale et au moins une chambre d'air supplémentaire pouvant être reliée avec celle-ci et pouvant être déconnectée de celle-ci par le biais d'une valve de commutation à commande électrique, les valves de commutation étant ouvertes ou fermées pendant une oscillation du mécanisme roulant en vue de basculer sur une autre courbe caractéristique d'amortissement, **caractérisé en ce que** l'oscillation du mécanisme roulant est détectée au moyen d'un détecteur de course de ressort puis interprétée pour déterminer au moins une fréquence d'oscillation dominante de l'oscillation du mécanisme roulant ainsi que la phase actuelle de l'oscillation du mécanisme roulant, et **en ce qu'**un instant de référence (t_{Ref}) et un temps d'attente (Δt_{W}) subséquent à celui-ci sont déterminés en tenant compte d'un temps de commutation (Δt_{S}) connu au moins approximativement des valves de commutation de telle sorte qu'une opération de commutation déclenchée à la fin du temps d'attente (Δt_{W}) pour ouvrir ou fermer les valves de commutation des amortisseurs pneumatiques concernés prend fin à peu près au passage par zéro (t₀, t_{0/2}) de l'oscillation du mécanisme roulant.

2. Procédé selon la revendication 1, **caractérisé en ce qu'**en présence d'un temps de commutation (Δt_{S}) des valves de commutation qui est inférieur à un quart de la période d'oscillation (T) de l'oscillation du mécanisme roulant (Δt_{S} < 1/4 T), l'instant (tₘₐₓ) du maximum d'oscillation suivant de l'oscillation du mécanisme roulant est déterminé et utilisé comme instant de référence (t_{Ref}) pour déterminer le temps d'attente (Δt_{W}) en vue de déclencher l'opération de commutation des valves de commutation (t_{Ref} = t_{maX}) .

3. Procédé selon la revendication 1, **caractérisé en ce qu'**en présence d'un temps de commutation (Δt_{S}) des valves de commutation qui est inférieur à la moitié et supérieur ou égal à un quart de la période d'oscillation (T) de l'oscillation du mécanisme roulant (1/4 T≤ Δt_{S} < 1/2 T), l'instant (t_{0/1}) du passage par zéro suivant de l'oscillation du mécanisme roulant est déterminé et utilisé comme instant de référence (t_{Ref}) pour déterminer le temps d'attente (Δt_{W}) en vue de déclencher l'opération de commutation des valves de commutation (t_{Ref} = t_{0/1}) .

4. Procédé selon l'une des revendications 1 à 3, **caractérisé en ce que** lors de la mise en service du véhicule automobile, une valeur de départ (Δt_{S0}) mise en mémoire est utilisée comme temps de commutation (Δt_{S}) des valves de commutation (Δt_{S} = Δt_{S0}) et **en ce que** le temps de commutation (Δt_{S}) des valves de commutation est corrigé pendant le déplacement suivant le besoin ou à des intervalles de temps prédéfinis puis mis en mémoire à la fin du déplacement en tant que valeur de départ (Δt_{S0}) pour le prochain déplacement (At_{S0} = Δt_{S}).

5. Procédé selon la revendication 4, **caractérisé en ce que** lors d'une opération de commutation des valves de commutation, la valeur réelle actuelle (Δt_{S_ist}) du temps de commutation des valves de commutation est détectée et, en cas d'écart par rapport à la valeur (Δt_{S_alt}) utilisée lors de la même opération de commutation, le temps de commutation est utilisé pour déterminer une valeur corrigée (Δt_{S_neu}) prévue pour être utilisée lors des prochaines opérations de commutation (Δt_{S_neu} = f (Δt_{S_alt}, Δt_{S_ist})) .

6. Procédé selon la revendication 5, **caractérisé en ce que** dans le cas de valves de commutation équipées d'un actionneur de valve électrique, la courbe dans le temps de la consommation électrique de l'actionneur de valve correspondant est interprétée pour déterminer la valeur réelle actuelle (Δt_{S_ist}) du temps de commutation.

7. Procédé selon l'une des revendications 4 à 6, **caractérisé en ce qu'**au moins un paramètre de fonctionnement qui influence le temps de commutation (Δt_{S}) des valves de commutation est détecté par des capteurs et utilisé pour la correction mathématique ou en fonction d'une courbe caractéristique de la valeur utilisée actuellement (Δt_{S_alt}) du temps de commutation.

8. Procédé selon la revendication 7, **caractérisé en ce que** la température ambiante (T_{U}) est détectée au moyen d'une sonde de température ambiante et utilisée pour la correction de la valeur utilisée actuellement (Δt_{S alt}) du temps de commutation (Δt_{S_neu} = f (Δt_{S_alt}, T_{U}) ) .

9. Procédé selon la revendication 7 ou 8, **caractérisé en ce que** la température du mécanisme roulant (T_{FW}) est détectée au moyen d'une sonde de température de mécanisme roulant disposée à proximité de l'une des valves de commutation et utilisée pour la correction de la valeur utilisée actuellement (Δt_{S_alt}) du temps de commutation au moins de la valve de commutation concernée (Δt_{S_neu} = f (Δt_{S_alt}, T_{FW})) .

10. Procédé selon l'une des revendications 1 à 9, **caractérisé en ce que** les valves de commutation des amortisseurs pneumatiques d'au moins un essieu commun d'un véhicule automobile sont commandées ensemble pour le basculement sur une autre courbe caractéristique d'amortissement.

11. Procédé selon l'une des revendications 1 à 9, **caractérisé en ce que** les valves de commutation des amortisseurs pneumatiques d'un véhicule automobile sont commandées individuellement pour le basculement sur une autre courbe caractéristique d'amortissement.
